# EUROPEAN PATENT SPECIFICATION

(11) **EP 1 771 787 B1**
(45) Date of publication and mention of the grant of the patent: **28.01.2009**
(21) Application number: 05767528.2
(22) Date of filing: 29.07.2005
(51) Int. Cl.: G06F 11/14

(54) **RECOVERY METHOD FOR A PORTABLE DATA PROCESSING APPARATUS**
WIEDERHERSTELLUNGSVERFAHREN FÜR EINE TRAGBARE DATENVERARBEITUNGSVORRICHTUNG
PROCEDE DE RECUPERATION POUR UN APPAREIL DE TRAITEMENT DE DONNEES PORTABLE

(30) Priority: 29.07.2004 GB 0416943
(43) Date of publication of application: 11.04.2007
(73) Proprietor: Biz2mobile Limited, Abingdon Oxfordshire OX13 6AB (GB)
(72) Inventor: THOMAS, Richard, Woodlands-St-Mary, RG17 7BD (GB); FELL, Paul Thomas, Bramley, RG26 5DD (GB); REES, Ian David, East hendred, Oxfordshire OX12 8JS (GB); ROWE, Michael, Reading, Berkshire RG1 4RA (GB)
(74) Representative: Butler, Michael John
(86) International application number: PCT/GB2005/003006
(87) International publication number: WO 2006/010952

(56) References cited:
- WO-A-20/04001589
- US-B1- 6 490 690

## Description

This invention relates to a recovery system for portable data processing apparatus.

As the pace of life and commerce increases globally, so the need to be organised and efficient wherever you are has gown. Mobile phones caused a revolution at the end of the 20th century in the way people live, work and interact. At the beginning of the 21st century individuals and businesses are coming to rely on ever more intelligent portable or mobile computers. These mobile computers allow people to carry around a vast amount of information and provide the ability to keep that information up-to-the-minute. As people and businesses rely on this key decision support tool, so the economic cost of equipment failure increases.

The most portable physical form factor is currently known as the "Personal Digital Assistant" or PDA. As the availability and practicality of wireless connectivity in these devices increases, so they are becoming known as the "Mobile Digital Assistant" or MDA. These devices can be used for people to connect to office systems, for example to handle e-mail or scheduling tasks, and increasingly to enable specific business applications to be run. For example, a courier business may provide its couriers with such a device loaded up with a specific business packages which logs items to be delivered and then their delivery. Such a system may have a bar code reader either integral with or connected to the device, to scan a bar code on a package so as to identify the package to the device. There may be an input device for a customer to enter a signature to acknowledge receipt.

A PDA is handheld device that can combine computing, with, for example, telephone, fax, and networking features. A typical PDA can function as a cellular phone, fax sender, and personal organizer. Unlike portable computers, most PDA's began as pen-based, using a stylus rather than a keyboard for input. This means that they also incorporated handwriting recognition features, and these can be carried over to business applications where for example it may be necessary to record a signature for receipt of a package. Some PDA's can also react to voice input by using voice recognition technologies. PDA's of today are available in either a stylus or keyboard version. The field of PDA was pioneered by Apple Computer^{™}_{,} which introduced the Newton^{™} MessagePad in 1993. Shortly thereafter, several other manufacturers offered similar products. Today, one of the most popular brands of PDA's is the series of Palm Pilots^{™} from Palm, Inc. PDA's are also called palmtops, hand-held computers and pocket computers.

The invention is particularly, but not exclusively, concerned with portable data processing apparatus of the type which is relatively small and lightweight, can preferably be held in one hand whilst being operated, and which has an integrated input system and display screen. Typically such a device will currently be termed a PDA or MDA. The term "MDA" will be used in this description as indicative of the general type of apparatus with which the invention is particularly concerned. This class of device is typically, but not exclusively, characterised by a palm sized form factor, a touch screen, and an increasing array of integrated wired and wireless communication facilities. In addition an array of peripherals can be plugged in via standardised ports, for example non-volatile memory units such as Secure Digital and Compact Flash cards. Peripherals may also be connected using short-range point-to-point communications technology, known as Personal Area Networking, such as Bluetooth^{™} or other radio or inductive systems..

This combination of integrated and plug-in peripherals can make a very powerful and compact digital tool. However, this creates two problems: Firstly the power demands on the battery pack become excessive, and battery life of less than a working day of eight hours is commonplace. Secondly, the software and firmware configuration of the device becomes complex, and in a diverse population of old and new equipment becomes difficult to re-establish after failure. These problems are made worse by the fact that many of the devices store only the basic operating system in Flash or EEPROM memory and have little or no reserve non-volatile storage as standard. As such the device only "remembers" more complex configuration parameters and files as long as power is present. In real-world business scenarios users forget to charge the devices or leave them for long periods in a cold environment, resulting in a discharged main and backup battery and loss of the operational software configuration necessary for a user to perform the tasks required by his job.

An MDA typically comes with a volatile (RAM) store and some form of integrated connectivity. Most devices contain a small non-volatile (EEPROM / FLASH) store which is geared towards occasional writing of data. Significantly the EEPROM or FLASH store is not designed for frequent writing of data and hence is generally not suitable for frequently changing data such as application data or application configuration and support files. EEPROM (Electrically Erasable Programmable Read-Only Memory) is a special type of read-only memory (ROM) that can be erased and written electrically. EEPROM is frequently used for system-board BIOS's so that a computer's BIOS can be updated just like a piece of software. FLASH is a non-volatile memory design used extensively in hand held devices and other mobile machines. Unlike random access memory, with EEPROM and FLASH information is retained even when power is not supplied to the circuit.

For information that changes frequently a different type of `plug-in' storage medium is used. This comes in several robust solid state forms, the most popular formats being Secure Digital (SD) Card and Compact Flash (CF) Card. These memory extensions are often plugged in and out at the discretion of the user from user accessible slots in the MDA housing. As such they are ideal for storing large amounts of data that can change frequently. However, they can be removed by the user, stolen, lost or dislodged if the MDA is dropped.

In addition to the presence of extra 'plug-in' storage media, the MDA may have a number of plug-in connectivity components that use the same standard SD or CF interfaces, such as GPS units, Wi-Fi or GPRS radios. These peripherals may also consist of identification components such as laser barcode scanners, imagers or scanners for RFID tags.

Transient or "partner" peripherals will also move in and out of range, some of which can form bridges between local area and wide area connectivity, such as Bluetooth and WI-FI.

All of these components require drivers and the correct hardware, software, application and security configuration settings to work effectively. It is unlikely that the factory default settings will cover even the minority of production configurations for such equipment. Hence there is a need to maintain increasingly complex and diverse configuration profiles and device drivers centrally for the purposes of initial commissioning, operational management and efficient recovery.

Integrated peripherals are very manufacturer specific. Many commercially available MDA's contain integrated radio frequency units such as Bluetooth, WI-FI, GPRS, UMTS, often in combination. These units often contain subsidiary components such as SIM Cards.

The more advanced MDA's will contain an array of identification devices such as biometric sensors, CCD cameras, RFID readers and laser scanners.

The more complex the array of integrated peripherals, the more complex the configuration and the more challenging the MDA is to manage over time. In particular the lifecycle of commodity devices is very short, often six months or less. In these cases equipment offering the same business function may have changed physically beyond recognition over the lifecycle of a three year project. External peripherals come in many shapes and sizes and may or may not be portable. Portable devices such as docking cradles, headsets, receipt printers, magnetic stripe readers and chip and pin readers are usually partnered with an MDA.

Fixed or larger peripherals such as desktop printers, print servers and the infinite array of semi-intelligent devices such as Sensor Nets, consumer electrical equipment or industrial equipment such as railway signals, vending machines or traffic barriers, may all wish to form a passing link with an MDA.

In a typical MDA, non-volatile memory such as an EEPROM contains the files necessary to set up the basic operating system of the MDA. When the device is turned on for the first time, or after a complete reset, the files create the basic operating system in battery backed memory. When devices such as bar code scanners, communications modules and so forth are added the necessary drivers and configuration files are stored in this battery backed memory. When a business software package is installed, the software files will normally be stored on non-volatile memory, as will the data from use of the package. However, configuration information regarding the software package will be stored in the battery backed memory. Normally, power from a main battery will power the device in use, and a backup battery will power the battery backed memory for a period if the main battery is removed or discharged completely. If there is complete loss of all battery power, or another reason for a complete reset of the device, everything in the battery backed memory will have been lost. The basic operating system will be re-installed from the EEPROM into the battery backed memory once the device is powered up again, but there will be no drivers for peripherals and, despite the existence of the business software files on the non-volatile memory, no knowledge by the device that the software exists.

There are known systems for restoring the configuration of conventional personal computers, for example. Typically, the software installed on a personal computer will comprise an operating system, configuration files, device driver files such as printer and network drivers, application programs such as a word processing or spreadsheet programs, and application data such as a word processing documents or spreadsheet files. In the event of a failure of the computer, there are various options for restoring operation.

At one level, it is possible to restore an operating system configuration by reverting to a back up of the most recent correct configuration. This is a feature in Microsoft Windows XP™ for example, and the system will normally continue to recognise peripherals and installed software. At another level, if operating system files have been erased or corrupted, the operating system can sometimes be repaired by means re-installation of the lost or corrupted file, for example by using an initial installation disk. In that case it may again be possible to continue with the original configuration. However, in some instances there is no option but to re-install the operating system, for example from the original installation disk. There may be a need to re-install any operating system updates that there have been since the software was originally installed, and then to identify the peripherals that are attached and install the appropriate drivers. Application software files may still reside on the computer hard drive, but it will usually be necessary to re-install the software packages so that they are recognised by the operating system and have access to the appropriate resources. In some cases, re-iristallation of the operating system will delete all existing files on the hard drive, including program files and data.

One approach to restoration is to use a backup system that takes an image of the computer hard drive and can be used to re-install the computer configuration to that at the time when the image was taken. This still has the disadvantage that any changes in the intervening period will be lost.

Typically, users restore a system from one or more DVD's or CD's, to the configuration when the computer was originally purchased or the software installed. This may involve configuring the computer BIOS to boot from CD, and using a recovery CD to initiate the recovery process. The user may need to spend considerable lengths of time subsequently installing individual programs, checking configurations, installing updates and so forth. This is time consuming and requires considerable user input if the system is to be brought as close as possible to the configuration before the failure.

These approaches are inappropriate for use with portable data processing devices use by operatives in the field such as couriers, parcel delivery operatives and so forth. They may not have the expertise nor the experience to restore the device to an operative condition, nor may they have recovery versions of the operating system or application programs. As a result, frequently an MDA device with serious software application failure or power failure will have to be returned to an office based support function. As the pace of life and competition increases, there will soon become an unacceptable gap in service.

Conventional solutions to this problem require the user to manually backup their work or involve a complex initial setup procedure. When a device fails then the user must restore the device to the previous settings. Frequently the last backup is not the most recent and hence data is lost. The user is also expected to be technically competent and select the most appropriate method of recovery.

Traditional methods also require the setup of complex static software configurations. Static configurations soon become out of date as they change in the real world. Equipment is serviced, components are unplugged and re-plugged and devices become paired and unpaired with various wireless peripherals. This usually creates a significant manual maintenance overhead.

In WO 2004/001589, there is disclosed a method for managing differing software configurations of a plurality of consumer electronic devices such as set top boxes or mobile telephones which communicate with a server over a network. Each device includes an identifier identifying that device to the server; the server having access to storage means storing a configuration record associated with the identified device. The configuration record comprises data indicating the software currently installed on the identified device and optional software available to that device. The method comprises selecting a plurality of software options for download to the device at least partly by reference to the configuration record associated with the device identifier; providing said software options to the device for download over the network; and updating the associated configuration record of the device in dependence on the download of at least one of the software options by the device.

From US 6 490 690 it is known an automatic restoration method for restoring of complete system configuration of a PDA by maintaining a system configuration script output stored remotely, which script output is used to restore the device configuration after a disaster failure.

This present invention aims to provide a system for recovering failed devices such as MDA's with a minimum of user intervention. An MDA will normally have a default basic software configuration which is automatically loaded from a non-volatile memory device when there is a cold reset after a failure such as loss of all battery power. The MDA will also have an operational software configuration which will allow a user to carry out the intended tasks with the MDA, but which is susceptible to loss after, for example, a complete reset due to loss of all battery power or other reasons. This operational configuration may include drivers, configuration data and / or additional software such as a business application.

According to the invention, there is provided a method for recovering the software status of portable data processing apparatus from a default software configuration to an operational software configuration, in the event of the apparatus reverting to the default software configuration or developing a corrupted software configuration; wherein:
the portable data processing apparatus comprises a base unit and a hardware peripheral connected to the base unit, use of the hardware peripheral requiring a peripheral driver which is not part of the default software configuration; the base unit has identifier data stored in non-volatile memory representing a unique identifier for the base unit; the portable data processing apparatus comprises a wireless connectivity system for establishing connectivity with a remote data facility; and the operational software configuration of the portable data processing apparatus comprises (i) a business application which is not part of the default software configuration and utilises the hardware peripheral, and (ii) the peripheral driver; characterised in that a recovery application is stored on the base unit in non-volatile memory and the base unit is configured to activate the recovery application in the event of the apparatus reverting to the default software configuration or developing a corrupted configuration, the arrangement being such that when the recovery application is activated the wireless connectivity system is used to established a data connection between the base unit and a configuration station at the remote data facility, the unique identifier of the base unit is identified by means of the configuration station, and the configuration station is used to access a configuration database having stored thereon a configuration record for the unit comprising data identifying (i) the unique identifier of the base unit, (ii) the hardware peripheral as associated with the base unit, and (iii) the operational software configuration associated with the base unit; and in that recovery data is received by the base unit from the remote data facility using the wireless connectivity system, and the recovery data is used by the recovery application in automatic recovery of the apparatus to the operational software configuration, including installation of the peripheral driver to make the hardware peripheral operable.

In some embodiment of the present invention, at least some files and / or data required for the operational software configuration are stored in semi-volatile memory in the base unit. By semi-volatile is meant memory, for example battery backed, whose contents are lost after certain operating conditions such as a hard reset of the apparatus or loss of all battery power.

The files and / or data may include device drivers and / or data for configuring one or more software applications.

The operational software configuration may involve additional connectivity drivers, peripheral applications, the business software package, and so forth. Essentially, as supplied from a basic manufacturer, or as configured after a complete reset, the portable apparatus will have a basic set of function. The additional software and configuration information makes the apparatus suitable for the particular needs of users in e.g. a corporate environment such as the operations of a courier service, maintenance operatives and so forth.

The data transmitted to effect recovery may be software installation files, drivers, data concerning peripherals, configuration parameters and so forth. In some case it might be necessary to re-install a business software package, for example if that is necessary for the operating system to recognise the package or if the package has been damaged. In other cases, it may be sufficient to supply a configuration file and perhaps other resources to the operating system so that the software is correctly identified. The same may apply to e.g. installing peripherals.

Other areas which may need attention are basic settings for the operating system such as time / date, geographical zone, language, currency, formats for displaying information and so forth.

It will be appreciated that in some cases, at least some and possibly all of the data required for recovery may be in non-volatile memory. This will depend on the nature of the failure leading to the reset, and the type of applications involved.

The data connection between the portable data processing apparatus and the configuration station is a wireless connection. Such a connection may typically use WLAN and WWAN technologies and may be via a mobile communications network such as GPRS , G3 or the like. However, other forms of establishing a connection may be possible using shorter range communications such as WiFi or Buetooth^{™}, particularly if there are suitable access points where the apparatus will be used. It is thus preferred that the recovery application of the portable data processing apparatus will be such as to enable a wireless connection to be established, or that this functionality is within the basic operating system that is available after a reset.

In a preferred embodiment of the invention, there is recovery software installed in non-volatile memory on the portable data processing apparatus, which will survive a range of failure scenarios. This software acts in the event of a failure so as to establish data communication with the configuration station so that the recovery process can be initiated. The recovery software stored on the portable data processing apparatus is preferably limited in size and can readily be stored on the non-removable, permanent memory of the apparatus whereas the additional software of the operational configuration will generally be more susceptible to loss in the event of a failure. For example, a critical package in the recovery software may comprise a small application which runs automatically when the apparatus starts up, an installer and basic communications package. A connectivity package with enhanced connectivity features is preferably also provided as part of the basic recovery software.

It will be appreciated that whilst the recovery process should be automatic, a degree of interactive user input may be required.

Preferably, the arrangement is such that a configuration can be restored over a wide area network. However, in some failure scenarios it may be necessary to establish communication witch the configuration station by means of a local area network or even a direct connection.

In one preferred embodiment, there is a plurality of configuration stations, and the configuration database is held on a configuration server accessible by the configuration stations. In the event that the identifier of portable data processing apparatus is unknown, for example because the device is new, either the configuration server or a separate information server selects an operational configuration appropriate for the type of apparatus.

The expression "configuration station" encompasses a single data processing unit or a number of units. For example there may be a configuration workstation to establish connectivity with the portable data processing apparatus, and a separate server which holds the database. Information from the database server may be sent to the configuration workstation for transmission to the portable apparatus, or may be sent directly. Files for downloading to the portable apparatus to create the appropriate configuration may be sent from the server, or stored on the workstation and sent from there, or may be obtained from an additional server.

In the use of a preferred embodiment of the invention, there may be the following key features:
1. The system requires no user intervention beyond plugging a portable device into a communications cradle, for example, or moving into an area of wireless coverage for the duration of the recovery process. It can therefore be achieved by any user rather than trained support personnel.
2. It can be installed onto the portable device without intervention and once installed will not be forgotten when the devices is cold rebooted or loses all power.
3. It works with commercially available pocket/handheld based computer hardware and software.
4. It can be tuned to specialist hardware and software configurations.
5. It only requires a small amount of non-volatile FLASH or EEPROM space in the device.
6. It can tolerate significant changes in the physical nature of the device during recovery, using known profiles registered with a server. In the preferred embodiments of the invention, a profile is the combination of settings that describes a set of portable devices with common characteristics. Profiles will generally exist for hardware, software, configuration and security purposes.
7. Devices may be recovered even when peripherals are changed, for example following or during a repair, as the solution will automatically configure itself based on the associated profiles.

A method in accordance with the invention can offer significant commercial benefit over existing solutions to this problem. It can significantly increase the number of portable devices recoverable in the field, thereby reducing lost operating time and logistics expense of moving failed equipment. As a result it reduces the amount of floating stock required to ensure continuous operation and the resources required to deliver the support of the system.

Some embodiments of the invention will now be described by way of example, and with reference to the accompanying drawings, in which:
Figure 1 which shows the basic architecture of a system in accordance with the invention; and
Figure 2 is a schematic diagram of portable data processing apparatus in accordance with the invention.

In reading the following description, reference may be had to the glossary at the end, which explains various terms used in the description and in the preceding introduction. However, the glossary does not restrict the scope of the invention, which is defined by the claims.

The combination of commissioning, operational management and recovery of mobile equipment is termed Mobile Solution Management (MSM) in the following description.

The MSM logical architecture consists of four core components:
An MDA device
A Local Commissioning Workstation ("the LCW")
A Central Management Server ("the CMS")
A Mobile Message Gateway ("the MMG")

It also may consist of several optional components:
A Master Information Server ("the MIS")
A set of integrated peripherals for data capture, connectivity and output.
A set of externally connected peripherals for data capture, connectivity and output.

Integrated and external peripherals may be, but are not limited to: one and two dimensional laser barcode scanners; CCD imagers; personal, local and wide area radio transmitter/receivers; wired communications adapters such as USB, Serial, Dialup, LAN and WAN; GPS Receivers; Sensor Nets including RFID; Receipt printers; Chip and pin readers; Magnetic stripe readers; Non-volatile storage media such as Compact Flash, Portable Hard Disk, CD-ROM, DVD and Smart Media; Measuring devices such as radio, laser and infra-red tape measures, temperature gauges, gas sensors, compasses, altimeters and barometers.

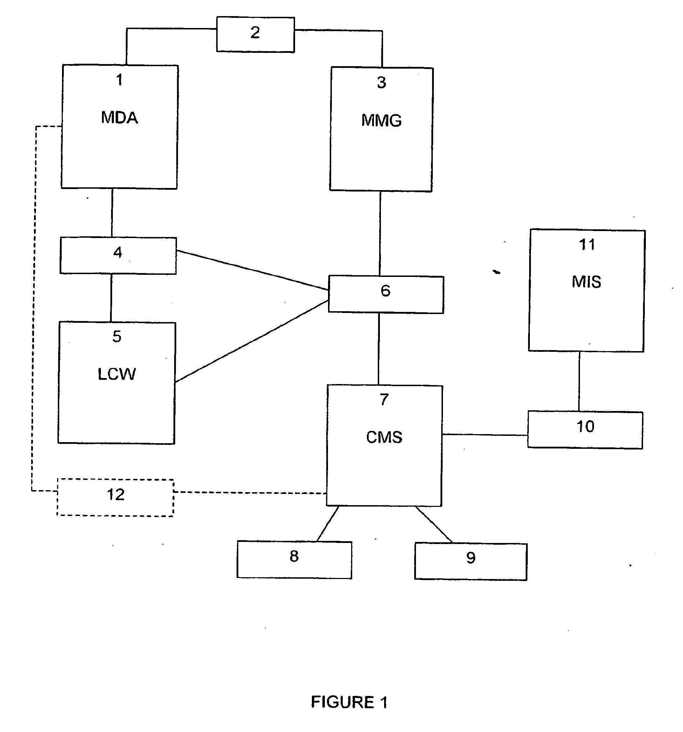

Figure 1 shows an MDA 1 which is connectable via a long range wired or wireless link 2 to a Mobile Message Gateway (MMG) 3. It is also connectable via a short range wired or wireless link 4 to a Local Commissioning Workstation (LCW) 5 and to a Wide Area Network (WAN) 6. The LCW 5 is also connected to the WAN 6, as is the MMG 3. A Central Management Server (CMS) 7 is linked to the WAN 6. This has a store 8 of non-critical peripheral applications and drivers, and a database 9 of profiles such as device and peripheral profiles. In addition the CMS 7 stores minimum bootstrap information and critical connectivity applications and drivers which may also be cached locally on LCW 5 to reduce network traffic. The CMS 7 may be connected via the Internet 10 to a Master Information Server (MIS) 11. There is a portable wireless link 12 from the CMS 7 to the MDA 1.

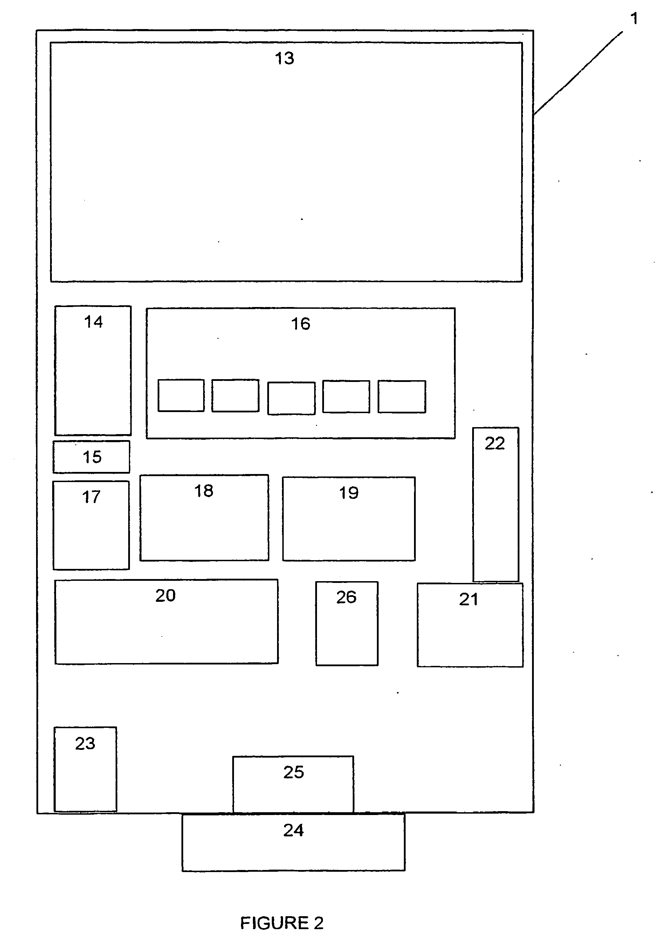

With reference to Figure 2, in this embodiment the MDA 1 is a hand held device with a touch screen 13, which can be used to input data, select options, display data and so forth. There is an integrated main battery power source 14 and backup battery power source 15, and control buttons, 16 for controlling various operations of the MDA. It has non-volatile, e.g. EEPROM, memory 17 which amongst other things may hold minimum bootstrap information and files necessary to generate a default operating configuration, a microprocessor 18 and semi-volatile battery backed memory 19. When the MDA is used for the first time or there is a hard reset, the default operating configuration is established by creating files in the semi-volatile memory 19 using the data stored in EEPROM 17. The MDA also has removable non-volatile memory 20 which in this case is in the form of a Secure Digital (SD) Card, and which is used to store critical connectivity applications and drivers, and a business application. There is integrated connectivity via a wireless communications module 21 (using for example a GPRS or G3 technology mobile telephone network) and an antenna 22. There is also a LAN port 23 and bar code reader scanner module 24 plugged into an accessories port 25. A clock 26 provides time / date information. The clock can be set manually, or remotely via the wireless communications module 21 or the LAN port 23.

This particular MDA is intended for use in e.g. a courier environment, where bar codes on packages can be read using the reader 24, and a receipt signature can be written on the touch screen 13 and the data stored. All data concerning deliveries to be made, pick ups, actions taken, receipt signatures and so forth is stored on the SD card 20.

The MDA hardware structure generally is conventional, and the use of MDA's in for example the field of a courier service is well known. Neither will be discussed in more detail in the present specification.

In general the MDA will be supplied from a manufacturer with default software such as an operating system and commonly used applications. It is envisaged that a business application, for example for use by operatives in a courier service, will be installed separately. If there is a serious fault, a reset or repair will take the MDA back to the factory default condition, without the business application.

The local commissioning workstation, or LCW, is used to install the basic recovery services onto a basic MDA supplied from a manufacturer. The workstation may be in the form of a desktop PC with a docking station connected by means of e.g. a network, serial, USB, or Firewire connection. Whilst wireless connectivity may be used, a hard wired connection is likely to be more reliable in this situation.

When an MDA is docked and connected to the LCW, information is sent to the LCW, which detects the docking and sends an installation application and minimal configuration details to enable the MDA to communicate with the Central Management Server, or CMS.

The CMS holds the knowledge of the last known good configuration of the MDA. It also holds knowledge of other possible configurations. If the MDA has changed configuration due to servicing, the replacement of pluggable components or peripherals that move into range, then the MDA communicates appropriate hardware changes to the CMS and may download updated profiles and software.

The Mobile Message Gateway, or MMG, is responsible for routing messages between the MDA and the CMS in a efficient, reliable and fault tolerant manner.

The Master Information Server, or MIS, is the master reference for all installed CMS systems that have registered with it. It collects information from other CMS systems and directly from manufacturer websites. It stores and indexes this information such that a CMS that finds an MDA and/or peripherals that it does not recognise, can contact the MIS and then search the full library of known equipment and download the appropriate hardware profile, software and configuration information.

It is impractical for a single MDA to store and maintain all possible partnerships in local storage; however, it is very valuable to provide the configurability to link to this equipment rapidly by means of the CMS or MIS.

When an MDA fails, it may need to recover from any of the following states, listed in order of increasing severity:
A. The MDA software load is intact, but external peripherals need to be configured before the Business Application can restart.
B. The MDA software load is missing the Business Application. It has failed to download, been stored on volatile media or been corrupted.
C. Only the MSM Critical load is resident on the MDA. This status can follow a complete battery failure resulting in hard reset on a device with non-volatile storage containing the MSM Critical load.
D. The MDA has returned to factory defaults and contains no bespoke software. This is often the result of complete battery failure resulting in hard reset on a device with no non-volatile storage or non-volatile store corrupt after the battery failure.

The following special cases of recovery are also considered:
E. As (B) but the MDA can also recognize external bridging peripherals that offer a bridge between short-range and long range connectivity.
F. As (D) but the MDA make and model are not recognised.
G. As (D) but the specific MDA is not recognised.

Recovery can occur from several states. However, the recovery software that is maintained by the MSM can be divided into the following categories - MSM Critical, MSM Connectivity, and Business.

Each software package contains an installable archive of software files together with a CRC profiles for the software package itself and for each file within the package.

The MSM Critical package contains the bare essentials required to enable the MDA to connect the CMS. This includes the MSM Installer, an Autorun Applet and configuration information so that the software runs whenever the MDA is booted up. This also includes the MSM Device Agent which is the core MDA equipment management component, used to manage local device hardware and peripherals. This may also include a communications driver as not all makes and model of MDA will have the necessary communications drivers preloaded. It provides, as a minimum, short-range (unsecured) access to the CMS.

The operating system, which in this particular embodiment is a Windows™ variant Pocket PC™, provides a mechanism to automatically run an Autorun program following a hard reset. The Autorun program is stored in non-volatile storage, such as the EEPROM 17. Following a hard reset the device will re-install its factory default operating system on the semi-volatile memory 19 from files on EEPROM 17 and initialise the device. The Autorun program will then run and will start an Installer. The Installer will detect that the hard reset has taken place and will commence the recovery process. The first stage in recovery is to configure the basic device settings, thus initialising the base state of the device ready for installation. The next stage in recovery is to install any device drivers, stored locally in non-volatile memory, that may be necessary to establish communication with the CMS. The Installer then notifies the CMS that there has been a reset, and provides the unique ID of the device to the CMS. The CMS retrieves the configuration information for the device, and then transfers files and / or instructions so that the Installer can continue with the recovery process.

Further device drivers are installed first to ensure that all expected hardware and assets can be detected and configured. The drivers are installed in the order defined by the deployment profile to ensure that the tested configuration is re-installed correctly. The device is then subjected to a soft reset. This step forces the newly installed device drivers to be loaded correctly.

The device assets are detected and details stored for later transmission to the server. If an asset such as a plug-in GPRS Radio etc has been changed during the hard reset this change will be automatically maintained.

The MSM Connectivity package is installed, this providing enhanced connectivity over short or long range communications links. This includes an MSM Messaging Agent which provides end-to-end resilient message based communications between the MDA and CMS via the MMG. It may also include communication drivers for peripherals such as GPRS cards. It provides, as a minimum, secured connectivity to the CMS.

Any setting defined in the device profile are deployed.

Next, the Business Package provides the business application(s) and configuration files. The applications are installed in the order defined by the deployment profile to ensure that the tested configuration is re-installed correctly

Finally, control of the device is relinquished, and there is a soft reset which allows the normal start up behaviour to take place. At this point the device is in an operational state.

It will be appreciated that if the device has failed because of loss of all battery power, it will first be necessary to provide an alternative battery or, for example, to connect the device to a re-charger.

It will also be appreciated that the recovery application itself may be only partially stored on the MDA, there being a bare minimum to enable connectivity to the CMS, and downloading of the full recovery software, before the full recovery process can take place.

Some alternative scenarios will now be discussed to show how recovery can take place in practice.

In a first scenario, the MDA has the Business Application and MSM software Loaded., but peripherals are not functioning. The MSM Device Agent traverses the configuration profile. For each Peripheral it installs the driver and performs the configuration correctly. The MDA has thus reconfigured the peripherals and started the Business Application successfully.

In a second scenario, the Business Application is not functioning properly but the MSM Connectivity software is loaded and usable. The MSM Installer application connects to the CMS according to the address specified in its configuration. It uses the most cost effective communications tunnel available and may chose to direct requests via the MSM Message Agent for WWAN requests. The MDA requests the required version of the main applications from the CMS and the CMS sends the Business Application and configuration files to the MDA. The MDA restarts and runs the MSM Installer software automatically, to install the Business Application.

In another scenario, the device must connect to the LCW. This will load an MDA configuration such that it can then locate and connect to the CMS. Typically the LCW is accessed via short-range, non-secure, auto-addressable connectivity such as USB, LAN or WI-FI. This scenario will also work as a means of commissioning new devices or devices that have been through a repair cycle.

The LCW detects the presence of an MDA that does not currently have the MSM Installer software loaded. This is achieved via a standard synchronisation protocol over a local link. This assumes that the MDA can achieve a simple local link and synchronise files based on the factory default settings, as is typically the case. The LCW sends the MSM Installer and Installer Critical configuration to the MDA, which receives the MSM Installer software, stores it in non-volatile memory and starts the Installer. The MDA registers with CMS and downloads configuration and critical software. The MDA then restarts and runs the MSM Installer software automatically.

The MDA thus has the MSM Critical Software loaded and is cold boot resilient on a MDA with non-volatile storage. It is ready to continue restoring further parts of the system.

In another scenario, the MDA may use an externally connected bridge to connect to the CMS. Before this bridge can be used, however, the configuration must be loaded. As shown by the dotted lines on Figure 1, the MDA may connect via a portable wireless bridge 12 to the CMS. Thus, the MDA may have for example Bluetooth connectivity which can be used to bridge to another MDA, PDA, mobile telephone or other device which can in turn form a connection to the Internet, for example.

As a starting point, the MDA has the MSM Connectivity software loaded and usable. The MSM Installer application connects to the CMS via short-to-long range communications with the bridging device. The MDA requests the required version of the main applications from the CMS. The return message is sent to the bridging device. The CMS sends the Business Application and configuration files to the MDA, and the MDA restarts and runs the MSM Installer software automatically. Thus the Business Application may be installed and the MDA returned to a fully operational state..

Manufacturers regularly introduce new makes and models of MDA's and peripherals, requiring new drivers and configuration changes. The CMS may not be able to recognise new device types. In this case the CMS can contact the MSM Master Information Server ("the MIS') across the Internet and query an unidentified make or model against a centrally maintained database. This service can also be used for MDA's using public infrastructure as the CMS is likely to be hosted within a walled Intranet. Once the MDA make and model has been identified by the MIS, the MDA is registered with the CMS and is ready to continue through full configuration.

Typically, the LCW detects the presence of an MDA that does not currently have the MSM Installer software loaded. This is achieved via a standard synchronisation protocol over a local link. This assumes that the MDA can achieve a simple local link and synchronise files based on the factory default settings as is typically the case. The CMS cannot locate the make and model of the requesting MDA, and contacts the MIS forwarding the make and model of the MDA The MIS looks up the MDA on the central database and returns the correct hardware configuration details. The CMS registers the new class of device locally to avoid the need to contact the MIS next time this class of device is found. The CMS sends the MSM Installer software and Installer critical configuration to the MDA. Scenario G - MDA Identity not recognized

When a new MDA is introduced into the environment it may not be recognized by the CMS. In this case the CMS can contact the MSM Master Information Server ("the MIS") across the Internet and query an unidentified MDA against a centrally maintained database in order to retrieve information pertaining to the MDA. This service can also be used for MDA's using public infrastructure as the CMS is likely to be hosted within a walled Intranet.

In this scenario, the MDA attempts to register with the CMS. The CMS cannot locate the unique ID of the requesting MDA, and contacts the MIS forwarding the ID of the unknown MDA. The MIS looks up the MDA on the central database and returns information which may include MDA configuration details. The CMS registers the new device locally. The MDA downloads configuration and critical software, restarts and runs the MSM Installer software automatically.

At the end of this part of the recovery process, the MDA has the MSM Critical software loaded and is cold boot resilient on a MDA with non-volatile storage. It is ready to continue with full configuration to its operational state.

Turning now to configuration profiles, the type of configuration profile determines the most suitable file format. For example complex hierarchical or relational data is best represented in a different physical file format type than critical logging status data, where every millisecond of latency can increase the chance of data corruption and decrease the chance of successful recovery. The preferred physical file formats for profiles are as follows:

| | |
|---|---|
| Hardware | XML Text or MDA specific |
| Software | XML Text or Application specific |
| Configuration | Simple Text or Peripheral specific |
| Security | XML Text with encrypted entries or Application specific text or binary |

In is also necessary to deal with ad-hoc failure conditions. During the recovery process several things can go wrong. These interruptions happen at unpredictable times and therefore have to be handled as interruptions at any point in the aforementioned scenarios. The anticipated problems, and the actions required, are as follows.

Low Power Failure: The MDA will display a Low Power screen instructing the user to charge it, and the MDA will be locked down until power has reached the acceptable operational threshold.

Critical Communications Failure: The MDA has been removed from or lost wired communications, or has roamed out of wireless coverage for a prolonged period during a critical part of the recovery process. The user is instructed to reconnect the device or move to a good area of coverage, until such time the device is locked down.

Security Failure; The MDA will be locked down until such time as a security code is entered or the security status is updated remotely by the CMS.
Time Out of Sync Warning: If the current date/time is not greater than the date/time equivalent of the last successful transaction recorded on the MDA, then the MDA will begin the search for a time enabled peripheral before proceeding. Time enabled peripherals can take many forms including GPS Receivers, Mobile Phones, Sensor Net Clocks, Wireless Networks Clocks, AND Wired Network Clocks.

If no correct date/time can be found at this time, then the date/time will be reset to 60 seconds ahead of the last previously recorded good time. When an accurate time does become available to the MDA it will move the clock forward and record a time synchronisation event. The CMS will then update date/time related transaction data where possible.

File Corruption Failure: As the MDA reboots or is reset, the MSM software performs a Cyclic Redundancy Check (CRC) on all critical system and data files. The correct CRC values are downloaded when first received by the MDA. If the actual values do not match the expected values, then the MDA will request replacement files from the CMS. This may be especially useful if the MDA is used when power is critically low, when a battery falls out or the MDA is reset unexpectedly whilst writing data to storage.

Storage Failure: The MDA can fail to write data to storage if the storage is full. The MDA provides two user defined thresholds, A warning level - perhaps 75% full and a critical level, usually 90%. At each stage the MDA will warn the user and then, at the critical level, only allow critical writes of data as defined by the applications.

This prevents problems arising from failure to store business critical data and unexpected behaviour when the storage is full, such as operating system cache failures.

Software Invalid: The physical or logical makeup of an MDA has changed and the software has become out of step with the latest desired configuration. This occurs when connected to and synchronising with the CMS. The MDA detects this deficiency and requests the updated configuration from the CMS.

Thus in this embodiment of the invention, there is provided an architecture and method for remembering and recovering the configuration of an MDA and associated peripherals from an uncertain state with no user intervention required beyond the placing of the MDA into a cradle if and when requested. A layering approach is used that adds intelligence to the MDA in stages to take best advantage of available connectivity at each stage. There is provided a mechanism that will work with both commercial and industrial MDA equipment, with an ability to tune the configuration to take advantage of custom hardware features such as additional types of integrated peripheral, non-volatile storage media and/or security features. The embodiment features a self learning system that can register new configurations with a master service that can then be shared across many companies. This provides a facility for companies to install new types of equipment with no additional configuration required. There is provided an MDA system able to use or be used as a secure short-to-long range connectivity bridge for recovery and business as usual communications. There is also provided a simple and reliable method of recovering the settings of an MDA suffering from battery failure in the field.

In accordance with the preferred embodiment of the invention, there is therefore provided a method for recovering the software status of portable data processing apparatus which has a default software configuration and an operational software configuration including additional software, the portable data processing apparatus further having stored data representing a unique identifier for the apparatus, wherein the system comprises the steps of establishing a data connection between the apparatus and a configuration station, determining the unique identifier of the apparatus by means of the configuration station, using the configuration station to access a configuration database having stored details of the operational software configuration associated with the apparatus having that unique identifier, and transmitting data to the apparatus so as to initiate automatic recovery of the apparatus to that operational software configuration.

## Claims

1. A method for recovering the software status of portable data processing apparatus (1) from a default software configuration to an operational software configuration, in the event of the apparatus reverting to the default software configuration or developing a corrupted software configuration;
wherein:
the portable data processing apparatus comprises a base unit (1) and a hardware peripheral (24) connected to the base unit, use of the hardware peripheral requiring a peripheral driver which is not part of the default software configuration;
the base unit has identifier data stored in non-volatile memory (17) representing a unique identifier for the base unit;
the portable data processing apparatus comprises a wireless connectivity system (21) for establishing connectivity with a remote data facility (CMS 7);
and the operational software configuration of the portable data processing apparatus comprises (i) a business application which is not part of the default software configuration and utilises the hardware peripheral, and (ii) the peripheral driver;
whereby a recovery application is stored on the base unit (1) in non-volatile memory(17) and the base unit is configured to activate the recovery application in the event of the apparatus reverting to the default software configuration or developing a corrupted configuration, the arrangement being such that when the recovery application is activated the wireless connectivity system (21) is used to establish a data connection between the base unit (1) and a configuration station (CMS 7) at the remote data facility, the unique identifier of the base unit is identified by means of the configuration station, and the configuration station is used to access a configuration database (9) having stored thereon a configuration record for the unit comprising data identifying (i) the unique identifier of the base unit, (ii) the hardware peripheral as associated with the base unit, and (iii) the operational software configuration associated with the base unit;
and in that recovery data is received by the base unit from the remote data facility using the wireless connectivity system (21), and the recovery data is used by the recovery application in automatic recovery of the apparatus to the operational software configuration, including installation of the peripheral driver to make the hardware peripheral (24) operable.

2. A method as claimed in claim 1, **characterised in that** a connectivity device driver necessary to activate the wireless connectivity system (21) is stored in non-volatile memory (19) of the base unit.

3. A method as claimed in claim 2, **characterised in that** upon activation of the recovery application, basic settings of the base unit (1) are configured using data stored in non-volatile memory of the base unit, subsequently wireless connectivity is enabled using the connectivity device driver, and subsequently there is established the data connection between the base unit (1) and the configuration station (CMS 7) at the remote data facility.

4. A method as claimed in claim 1, 2 or 3, **characterised in that** the wireless connectivity system (21) includes a first wireless connectivity component which is adapted to establish long range connectivity with the remote data facility using a relatively long range wireless communications network (2), and a second wireless connectivity component which is adapted to establish relatively short range wireless connectivity with a local device (12);
when the recovery process is activated there is established short range wireless connectivity with the local device (12) using the second wireless connectivity component, the local device serving as a bridge to a long range communications network so as to establish communication between the base unit (1) and the configuration station (CMS 7) at the remote data facility;
and the recovery data is transmitted to the base unit (1) via the local device (12) serving as a bridge, and the short range wireless connectivity between the local device and the portable data processing apparatus.

5. A method as claimed in any preceding claim, **characterised in that** the database server (9) is in database communication with an information server (MIS) for receipt of information concerning the base unit (1) if there is no stored configuration record for the base unit in the database.

## Patentansprüche

1. Verfahren zum Wiederherstellen des Softwarestatus eines portablen Datenverarbeitungsgeräts (1) aus einer Default- bzw. Standard-Softwarekonfiguration in eine operationelle bzw. betriebsfähige Softwarekonfiguration für den Fall, dass das Gerät zu der Default-Softwarekonfiguration zurückkehrt oder eine korrumpierte Softwarekonfiguration entwickelt;
wobei
das portable Datenverarbeitungsgerät eine Basiseinheit (1) und eine Hardware-Peripherieeinheit bzw. ein Hardware-Peripheriegerät (24), die bzw. das mit der Basiseinheit verbunden ist, aufweist, wobei die Verwendung der Hardware-Peripherieeinheit einen Peripherieeinheitentreiber erfordert, der nicht Teil der Default-Softwarekonfiguration ist;
die Basiseinheit Identifizierer- bzw. Identifikationsdaten, die im nicht-volatilen Speicher (17) gespeichert sind, aufweist, die ein einzigartiges Identifikationsmerkmal für die bzw. der Basiseinheit repräsentieren;
das portable Datenverarbeitungsgerät ein drahtloses Konnektivitäts- bzw. Verbindungssystem (21) zum Einrichten einer Konnektivität bzw. Verbindung mit einer Remote-Dateneinrichtung bzw. -anlage (CMS7) aufweist;
und die operationelle Softwarekonfiguration des portablen Datenverarbeitungsgerätes (i) eine Businessapplikation, die nicht Teil der Default-Softwarekonfiguration ist, und die die Hardware-Peripherieeinheit verwendet, und (ii) den Peripherieeinheitentreiber aufweist;
wodurch eine Recovery- bzw. Wiederherstellungsapplikation auf der Basiseinheit (1) im nichtvolatilen Speicher (17) gespeichert wird, und die Basiseinheit dafür eingerichtet wird, die Recoveryapplikation für den Fall, dass das Gerät zur Default-Softwarekonfiguration zurückkehrt, oder eine korrumpierte Konfiguration entwickelt, zu aktivieren, wobei die Anordnung derart ist, dass, wenn die Recoveryapplikation aktiviert wird, das drahtlose Konnektivitätssystem (21) dafür verwendet wird, eine Datenverbindung zwischen der Basiseinheit(1) und einer Konfigurationsstation (CMS7) bei bzw. in der entfernten Dateneinrichtung einzurichten, wobei das einzigartige Identifizierungsmerkmal der Basiseinheit durch die Konfigurationsstation identifiziert wird, und die Konfigurationsstation verwendet wird, auf eine Konfigurationssdatenbank (9) zuzugreifen, die hierzu einen Konfigurationseintrag für die Einheit gespeichert hat, der (i) das einzigartige Identifizierungsmerkmal der Basiseinheit, (ii) die Hardware-Peripherieeinheit, wie sie der Basiseinheit zugeordnet ist, und (iii) die operationelle Softwarekonfiguration, die der Basiseinheit zugeordnet ist, identifiziert;
und wobei Recoverydaten durch die Basiseinheit von der entfernten Dateneinrichtung unter Verwendung des drahtlosen Konnektivitätssystems (21) empfangen werden, und die Recoverydaten durch die Recoveryapplikation bei der automatischen Wiederherstellung des Geräts in den operationelle Softwarekonfiguration verwendet werden, darunter die Installation des Peripherieeinheitentreibers, um die Hardware-Peripherieeinheit (24) betriebsfähig zu machen.

2. Verfahren nach Anspruch 1, **dadurch gekennzeichnet, dass** ein Konnektivitätsvorrichtungstreiber, der für die Aktivierung des drahtlosen Konnektivitätssystems (21) notwendig ist, im nichtvolatilen Speicher (19) der Basiseinheit gespeichert ist.

3. Verfahren nach Anspruch 2, **dadurch gekennzeichnet, dass** auf eine Aktivierung der Recoveryapplikation hin grundlegende Einstellungen der Basiseinheit (1) unter Verwendung von Daten, die im nichtvolatilen Speicher der Basiseinheit gespeichert sind, konfiguriert werden, anschließend eine drahtlose Konnektivität unter Verwendung des Konnektivitätsvorrichtungstreibers ermöglicht wird, und danach die Datenverbindung zuwischen der Basiseinheit (1) und der Konfigurationsstation (CMS7) im der entfernten Dateneinrichtung eingerichtet wird.

4. Verfahren nach Anspruch 1, 2 oder 3, **dadurch gekennzeichnet, dass** das drahtlose Konnektivitätssystem (21) eine erste drahtlose Konnektivitätskomponente beinhaltet, die dafür eingerichtet ist, eine Konnektivität bezüglich großer Reichweiten mit der entfernten Dateneinrichtung unter Verwendung eines drahtlosen Kommunikationsnetzwerks (2) für relativ große Reichweiten einzurichten, und eine zweite drahtlose Konnektivitätskomponente, die dafür eingerichtet ist, eine drahtlose Konnektivität für relativ geringe Reichweiten mit einer lokalen Vorrichtung (12) einzurichten;
wenn der Recoveryvorgang aktiviert wird, eine drahtlose Konnektivität für kurze Reichweiten mit der lokalen Vorrichtung (12) eingerichtet wird, wobei die zweite drahtlose Konnektivitätskomponente verwendet wird, wobei die lokale Vorrichtung als eine Bridge bzw. Brücke zu einem Kommunikationsnetzwerk großer Reichweite verwendet wird, um hierdurch eine Kommunikation zwischen der Basiseinheit (1) und der Konfigurationsstation (CMS7) in der entfernten Dateneinrichtung einzurichten;
und die Daten an die Basiseinheit(1) über die lokale Vorrichtung (12), die als Brücke dient, und die drahtlose Konnektivität für kurze Reichweiten zwischen der lokalen Vorrichtung und dem portablen Datenverarbeitungsgerät übertragen werden.

5. Verfahren nach einem der vorstehenden Ansprüche, **dadurch gekennzeichnet, dass** der Datenbankserver (9) in Datenbankverbindung mit einem Informationsserver (MIS) zum Empfangen von Informationen, die die Basiseinheit (1) betreffen, steht, wenn kein gespeicherter Konfigurationseintrag für die Basiseinheit in der Datenbank existiert.

## Revendications

1. Procédé pour effectuer la récupération de l'état logiciel d'un dispositif de traitement de données portable (1) d'une configuration logicielle par défaut en une configuration logicielle opérationnelle, dans l'éventualité où le dispositif est revenu à la configuration logicielle par défaut ou a développé une configuration logicielle corrompue ;
dans lequel :
le dispositif de traitement de données portable comporte une unité de base (1) et un périphérique matériel (24) connecté à l'unité de base, l'utilisation du périphérique matériel nécessitant un pilote de périphérique ne faisant pas partie de la configuration logicielle par défaut ;
l'unité de base a des données d'identifiant mémorisées dans une mémoire non-volatile (17) représentant un identifiant unique pour l'unité de base ;
le dispositif de traitement de données portable comporte un système de connectivité sans fil (21) pour établir une connectivité avec une installation de données distante (CMS 7) ;
et la configuration logicielle opérationnelle du dispositif de traitement de données portable comporte (i) une application commerciale ne faisant pas partie de la configuration logicielle par défaut et utilise le périphérique matériel, et (ii) le pilote de périphérique ;
dans lequel une application de récupération est mémorisée sur l'unité de base (1) dans la mémoire non-volatile (17) et l'unité de base est configurée pour activer l'application de récupération dans l'éventualité où le dispositif est revenu à la configuration logicielle par défaut ou a développé une configuration corrompue, l'agencement étant tel que, lorsque l'application de récupération est activée, le système de connectivité sans fil (21) est utilisé pour établir une connexion de données entre l'unité de base (1) et une station de configuration (CMS 7) dans l'installation de données distante, l'identifiant unique de l'unité de base est identifié par l'intermédiaire de la station de configuration, et la station de configuration est utilisée pour accéder à une base de données de configuration (9)
dans laquelle est mémorisé un enregistrement de configuration pour l'unité comportant des données identifiant (i) l'identifiant unique de l'unité de base, (ii) le périphérique matériel tel qu'associé à l'unité de base, et (iii) la configuration logicielle opérationnelle associée à l'unité de base ;
et dans lequel les données de récupération sont reçues par l'unité de base en provenance de l'installation de données distante utilisant le système de connectivité sans fil (21), et les données de récupération sont utilisées par l'application de récupération lors d'une récupération automatique de la configuration logicielle opérationnelle du dispositif, incluant l'installation du pilote de périphérique pour rendre le périphérique matériel (24) opérationnel.

2. Procédé selon la revendication 1, **caractérisé en ce qu'**un pilote de dispositif de connectivité nécessaire pour activer le système de connectivité sans fil (21) est mémorisé dans une mémoire non-volatile (19) de l'unité de base.

3. Procédé selon la revendication 2, **caractérisé en ce que** lors de l'activation de l'application de récupération, des paramètres de base de l'unité de base (1) sont configurés en utilisant des données mémorisées dans la mémoire non-volatile de l'unité de base, puis une connectivité sans fil est activée en utilisant le pilote de dispositif de connectivité et, ensuite, la connexion de données est établie entre l'unité de base (1) et la station de configuration (CMS 7) dans l'installation de données distante.

4. Procédé selon l'une quelconque des revendications 1, 2 ou 3, **caractérisé en ce que** le système de connectivité sans fil (21) inclut un premier composant de connectivité sans fil qui est adapté pour établir une connectivité longue portée avec l'installation de données distante en utilisant un réseau de communications sans fil à portée relativement longue (2), et un second composant de connectivité sans fil qui est adapté pour établir une connectivité sans fil à portée relativement courte avec un dispositif local (12) ; lorsque le processus de récupération est activé, une connectivité sans fil courte portée est établie avec le dispositif local (12) en utilisant le second composant de connectivité sans fil, le dispositif local servant de pont à un réseau de communications longue portée de manière à établir une communication entre l'unité de base (1) et la station de configuration (CMS 7) dans l'installation de données distante ;
et les données de récupération sont transmises à l'unité de base (1) via le dispositif local (12) servant de pont, et la connectivité sans fil courte portée entre le dispositif local et le dispositif de traitement de données portable.

5. Procédé selon l'une quelconque des revendications précédentes, **caractérisé en ce que** le serveur de base de données (9) est en communication de base de données avec un serveur d'informations (MIS) pour la réception d'informations concernant l'unité de base (1) s'il n'y a pas d'enregistrement de configuration mémorisé pour l'unité de base dans la base de données.
